# EUROPEAN PATENT APPLICATION

(11) **EP 4 738 265 A1**
(43) Date of publication of application: **06.05.2026**
(21) Application number: 24210638.3
(22) Date of filing: 04.11.2024
(51) Int. Cl.: G06T 11/00

(54) **IMPROVING THE GENERATION OF REALISTIC IMAGES BY GENERATIVE MACHINE LEARNING MODELS**

(71) Applicant: Robert Bosch GmbH, 70442 Stuttgart (DE)
(72) Inventor: Shapiro, Yoel, 2751418 Kiryat Bialik (IL); Mullick, Koustav, 700090 Kolkata, West Bengal (IN)

(57) **Abstract**

A method (100) for improving the conformity of output images (3) produced by a generative image-to-image machine learning model, GMLM (2), with the domain and/or distribution to which a given input image (1) belongs, comprising the steps of:
• processing (110), by the GMLM (2), at least one input image (1) into one or more output images (3);
• comparing (120), by a predetermined similarity measure (4), the one or more output images (3) produced from the input image (1) to the input image (1); and based on the result (4a) of this comparison:
• optimizing (130) one or more parameters (2a) that influence the behavior of the GMLM (2) towards the goal of making subsequent output images (3) produced from the input image (1) more similar to the input image (1); and/or
• modifying (140) at least a portion of at least one output image (3) towards the goal of making this output image (3) more similar to the input image (1).

## Description

The present invention relates to the generation of realistic images by generative machine learning models. For example, these generated images may be used as training images for training a downstream machine learning model towards a given task.

### Background

The training of image processing machine learning models towards a given task requires a large set of training images. These training images need to be acquired somehow. If the training is a supervised training, each training image needs to be labelled with "ground truth" that the image processing machine learning network should ideally produce when being given the respective training image. Therefore, training images are a scarce resource. In particular, it is difficult to achieve a sufficient variability in the set of training images, so that this set of training images also covers situations that occur rarely but nonetheless need to be handled correctly.

Generative image-to-image machine learning models are therefore used to augment the set of available training images. If a generated image is basically a variation of a training image for which a ground truth label is known, then the generated image may be used as a new, different training image, but the ground truth label may be re-used. However, the generated image should be free from added "hallucinations" or other artifacts that have no correspondence in the ground truth labels.

### Disclosure of the invention

The invention provides a method for improving the conformity of output images produced by a generative image-to-image machine learning model, GMLM, with the domain and/or distribution to which a given input image belongs. In particular, this domain and/or distribution may relate to the semantic content of the input image, and/or to the rendering of this semantic content into the input image. For example, images of sceneries in the environment of a vehicle and/or robot may belong to different domains and/or distributions depending on the compositions of object instances therein, and also depending on generic conditions of the respective sceneries. For example, images acquired in fine-weather conditions on a sunny day may be considered to belong to one domain and/or distribution, and images acquired at nighttime, and/or in other poor-visibility conditions such as rain, fog or snow, may be considered to belong to another domain and/or distribution.

One and the same image may belong to multiple domains and/or distributions. For example, the image may belong to a first domain and/or distribution by virtue of the composition of object instances therein, and it may belong to a second domain and/or distribution by virtue of the weather conditions in which it was taken. In particular, the GMLM may be trained to generate, from an input image that is in a source domain and/or distribution with respect to at least one property (such as object composition or weather conditions), an output image that is in a different target domain and/or distribution with respect to this property. In one example, the GMLM may be trained to generate, from an input image taken in fine-visibility conditions, an output image that looks as if it has been taken in poorer-visibility conditions, but otherwise still resembles the input image. In particular, the semantic content of the output image may still be substantially the same as the semantic content of the input image. That is, the GMLM may be used to perform a controlled domain transfer of the input image. Compared to domain transfer with a generative adversarial network, GAN, the advantage is that there is more control over whether "ground truth" labels for the input image are re-usable for the output image.

In the course of the method, at least one input image is processed into one or more output images by the GMLM. For example, if the GMLM is a diffusion model, each such processing may start from a version of the image that has been corrupted with a different noise sample, e.g., represented by different "seeds" from which the processing starts. In this manner, repeated processing of one and the same input image may produce different output images.

The one or more output images produced from the input image are compared to the input image by a predetermined similarity measure. In particular, this similarity measure may be specific to the application at hand and measure which properties in the output image should somehow adhere to the respective properties of the input image. In one example, the similarity measure may measure whether the output image has a semantic content that is substantially the same as the semantic content of the input image.

The similarity measure may be computed based on one single output image, but it may also, for example, be computed based on multiple output images. For example, when computing multiple output images from one and the same input image, the respective similarities of the output images to the input image may be aggregated, e.g., averaged. For example, when using a diffusion model as the GMLM, this makes the finally obtained value of the similarity measure more deterministic even though each pass through the diffusion model starts from a different noise sample.

There are now two not mutually exclusive options how to make the output images more realistic.

As the first option, one or more parameters that influence the behavior of the GMLM are optimized towards the goal of making subsequent output images produced from the input image more similar to the input image.

As the second option, at least a portion of at least one output image is modified towards the goal of making this output image more similar to the input image.

The reasoning behind the first option is that, even if the GMLM is used in a fully trained state, there are still some parameters with which the behavior may be fine-tuned. It is not immediately self-evident in which direction each such parameter needs to be changed to make the output image more realistic, in particular by avoiding "hallucinations" in the form of objects that cannot be realistically there (such as a sixth finger on the hand of a person), and/or in the form of artifacts (such as pixelized features that have no resemblance to any real object). By using the similarity measure, an objectivized search for the best values of these parameters may be carried out.

The mentioned parameters are to be distinguished from hyperparameters. Hyperparameters are parameters that modify the architecture of the model, and/or the manner in which it is being trained. In the context of the present method, it is likely that the model will be used in a pre-trained state as it is. That is, it is better to call the mentioned parameters "usage parameters".

The reasoning behind the second option is that artifacts and hallucinations mostly affect only small portions of the output image, rather than the whole output image. By modifying only these small affected portions, most of the image content that has been generated by the GMLM may be used, while the repairing of the artifacts and hallucinations avoids problems that these disturbances might cause, e.g., when the generated images is used as a training image for an image processing machine learning model.

Both approaches may be combined. For example, first said "usage parameters" of the GMLM may be optimized on a set of "calibration image" and a similarity measure that measures the similarity of the output image to the respective calibration image. When the GMLM is subsequently used on a new input image with these optimized "usage parameters", any artifacts and other disturbances may be cured by modifying the output image for best similarity to said new input image.

Where calibration images are used, optionally, the similarity of the output images generated based on each calibration image may be averaged over a whole set of calibration images. Also, for each calibration image, multiple (e.g., 3) output images may be generated, and the similarity of each output image to the original calibration image may be measured. For example, for each calibration image, the maximum similarity (= minimum distance) of an output image generated from this calibration image may be measured and associated with this calibration image, so that there is one single similarity or distance associated with each calibration image. The similarities or distances associated with all calibration images in the set of calibration images may then be averaged.

The end result is that the finally obtained output images qualify as realistic with respect to the given application at hand to a larger extent, while their content can be finely controlled by means of the supplied input image.

In a particularly advantageous embodiment, the GMLM comprises a neural network with a plurality of neurons or other processing units. The inputs to each neuron are weighted with weights and thereby summed in a weighted sum to form an activation of the respective neuron or other processing unit. For example, this activation may then be processed into the final output of the respective neuron or other processing unit by applying a nonlinear activation function, such as the Rectified Linear Unit, ReLU. At least a portion of these weights remain frozen when optimizing the one or more parameters that influence the behavior of the GMLM. That is, these parameters are not part of the optimization. In this manner, the respective part of the prior training of the GMLM is left intact. The more weights are frozen, the more the optimization is confined to said "usage parameters" that are left open for adjustment after the training. In most use cases, the required resources in terms of training examples and computing power for a partial or full re-training, or even a fine-tuning of the GMLM, are not available. It is then better (e.g., more practical, faster, and/or more cost-effective) to trust the original training of the GMLM, which has typically been performed on many millions (or even billions) of input images from all walks of life.

To put this in concrete numbers, advantageously, at least 80 % of the weights, preferably at least 99 %, and most preferably all of the weights, remain frozen when optimizing the one or more parameters that influence the behavior of the GMLM.

In a particularly advantageous embodiment, the "usage parameters" that influence the behavior of the GMLM and that are optimized comprise one or more of:
- a desired degree of adherence of the output image to an input image, and/or to a text prompt, from which it is generated;
- a number of iterations, such as de-noising steps of a diffusion model, to be performed by the GMLM;
- an algorithm that rates the outcome of each iteration of the GMLM and adapts the next iteration accordingly;
- a desired style of the output image; and
- a text prompt that supplements the input image.

By choosing one, a combination of a few, or all of these "usage parameters", a search space may be spanned that is sufficiently small to be searched even though gradient-based optimization methods are not available because of the discrete nature of most of said parameters.

For example, ControlNet, which can be used to augment an already trained model with a trainable aspect to achieve a modified behavior that adheres to certain conditions, supports diverse image controls, such as:
- depth (monocular estimation),
- semantic segmentation,
- edges (canny), and
- skeleton points.

Each of these controls has its own guidance parameter that controls the adherence of the result to certain conditions.

As another example, embedding values may be regularized in between diffusion iterations (hot/cold shifts).

As discussed before, in a particularly advantageous embodiment, at least one calibration image that is known to be realistic with respect to a given use case is chosen as an input image. In particular, calibration images may be used when optimizing the "usage parameters" that influence the behavior of the GMLM. For example, in a use case where training images for an image processing machine learning model that is to process images from the surroundings of a vehicle or robot are needed, actual images acquired by a camera on board a vehicle and/or robot may be used. Also, the calibration images may be deliberately chosen to be images that are known to cause difficulties for the GMLM, so as to improve the performance exactly where it is lacking.

In a further particularly advantageous embodiment, the input and output images are divided into patches, object instances and/or features. The similarity measure is computed with respect to individual patches, object instances and/or features. In this manner, localized hallucinations or other artifacts may be detected and selectively repaired. Herein, "features" may relate to semantic features and/or semantic labels, but also to any other kind of element that can be detected in the image and is supposed to convey an intended meaning of the image.

In a further particularly advantageous embodiment, multiple values of the similarity measure computed for individual patches, object instances and/or features, and/or for the image as a whole, are aggregated to form an overall rating of the similarity of patches, object instances, features, and/or the image as a whole. In this manner, there is flexibility as to how artifacts of different kinds that affect different portions of the image should be penalized in the rating for the image as a whole. In particular, it may depend on the kind and location of any artifacts how problematic they are for the later use of a generated image as a training image for an image processing machine learning model.

Exemplary manners of aggregating individual similarity values, which may be used alone or in combination, include:
- multiplying the individual similarity values;
- forming a linear combination of the similarity values;
- selecting the best of the individual similarity values; and
- selecting the worst of the individual similarity values.

As discussed before, the concrete choice of the manner to be used may depend on the use to which the generated output image is to be put.

In a further particularly advantageous embodiment, the dividing into object instances and/or features is performed using ground truth that is available regarding the presence of object instances and/or features in the input image. In this manner, the generated output image may be better steered towards having a certain known semantic content of the input image. Moreover, the similarity rating for individual object instances and/or features, and for the generated output image as a whole, is better aligned with this semantic content.

In a further particularly advantageous embodiment, the modifying of the output image comprises: in response to determining that the similarity with respect to a particular patch, object instance and/or feature meets a predetermined criterion, amending and/or replacing this patch, object instance and/or feature with content from at least one alternate image source. In this manner, if the generated output image should turn out not to be realistic enough in a certain aspect, this aspect may be selectively repaired with something that is known to be realistic. Apart from this to-be-repaired aspect, the generated output image may be used. This is based on the observation that most hallucinations or other artifacts affect only a small portion of the generated output image. In other words, many generated output images would have been perfect for further downstream use had it not been for a few particular defects. Replacing the defective patches and/or features with content from the alternate image source removes the detrimental effects of said defects on the downstream use of the generated output image, while at the same time keeping the advantage that using a GMLM-generated output image has over other data augmentation methods, such as generation by a GAN network. In particular, one may still largely enjoy the enhanced photorealism of GMLM-generated images, while falling back to the more reliable simulated images in regions where the GMLM does not perform so well. Examples of regions that are prone to this include small objects, or objects of categories on which the GMLM was not trained so well.

For example, the modifying of the input image may be performed by pixel-wise blending of the output image with the image from the alternate image source, with the blending weights determined by the local value of the similarity measure for the location of the pixel. For example, the local value of the similarity measure may be the similarity of a patch or other feature to which this pixel belongs to a corresponding patch or other feature in the input image. For example, if the similarity is between 0 and 1, the pixel of the output image may be weighted with this similarity, whereas the pixel of the alternate image may be weighted with 1 minus the similarity.

In particular, the alternate image source may comprise the output produced by a further machine learning model from the same input image. This may have hallucinations, artifacts or other defects as well, but it is unlikely that they are in the same place as the defects in the output image from the GMLM. In particular, the further machine learning model may be an in-painting model that has been specifically trained to fill in missing or corrupt parts of an image. Alternatively or in combination to this, the input image may be used as alternate image source. In this manner, the intended variation (departure) from the input image towards the output image is locally sacrificed in order to avoid having something totally unrealistic in the output image.

In a further particularly advantageous embodiment, a simulated image of a given scenery is chosen as the input image. In this manner, the semantic content of the input image is exactly known. This also means that an arbitrary number of output images with a defined semantic content may be generated. As discussed before, this is particularly advantageous for producing training examples for a downstream image processing machine learning model.

In a further particularly advantageous embodiment, the given similarity measure is chosen to combine vectorial embeddings from multiple machine learning models in one common space. In this manner, the effects to which the respective machine learning models have been trained may be combined and blended. One exemplary vision language model, VLM, that may be used for measuring the similarity between images is the DreamSim model that uses an ensemble of embeddings from three different models, namely DINO (a self-supervised vision model), CLIP and OpenCLIP. In particular, in the common space, it is easy to compute respective image-to-image distances and aggregate them to a final distance measure or similarity measure. For example, if the distance is measured on a scale between 0 and 1, the similarity may be computed as 1 minus this distance.

In a further particularly advantageous embodiment, a physical product is manufactured, and/or a physical scenery is set up, according to an output image obtained from the GMLM. In this manner, the GMLM may be used to create new designs for products and/or sceneries that still adhere to certain desired properties specified by means of the input image.

As discussed before, a major use case of generated output images is training a downstream image processing machine learning model. Therefore, in a further particularly advantageous embodiment, the method further comprises training an image processing machine learning model towards a given task using one or more output images from the GMLM as training images. In this context, the advantage of the present method is that a large number of training examples with a high variability can be produced, while there is more control over the semantic content of the training examples. By virtue of this, it is ensured that the training examples sufficiently cover the domain and/or distribution of images that they are supposed to cover. Moreover, existing ground truth labels for the semantic content may be re-used. In particular, if the input image is a simulated image, the ground truth labels are automatically known from the start. In particular, in one example, the given task of the image processing machine learning model may comprise classification and/or regression. Classification assigns classification scores with respect to one or more classes to an image, whereas regression estimates, from an image, values of one or more desired numeric properties. In particular, the classes of the classification may relate to types of sceneries or types of object instances that are contained in these sceneries. For example, the object instances may relate to traffic signs, road markings, obstacles, other traffic participants, or any other kind of traffic-relevant object that an autonomously moving vehicle or robot needs to consider for planning its own trajectory.

In a further particularly advantageous embodiment, one or more images recorded by at least one sensor are processed by the trained image processing machine learning model. From the output of the trained image processing machine learning model, an actuation signal is computed. A vehicle, a driving assistance system, a robot, a quality inspection system, and/or a medical imaging system, is actuated with the actuation signal. In this manner, the action performed by the actuated system in response to the actuation signal has a higher propensity of being appropriate for the situation that is characterized by the one or more recorded images.

The method may be wholly or partially computer-implemented and embodied in software. The invention therefore also relates to a computer program with machine-readable instructions that, when executed by one or more computers and/or compute instances, cause the one or more computers and/or compute instances to perform the method described above. Herein, control units for vehicles or robots and other embedded systems that are able to execute machine-readable instructions are to be regarded as computers as well. Compute instances comprise virtual machines, containers or other execution environments that permit execution of machine-readable instructions in a cloud.

A non-transitory storage medium, and/or a download product, may comprise the computer program. A download product is an electronic product that may be sold online and transferred over a network for immediate fulfilment. One or more computers and/or compute instances may be equipped with said computer program, and/or with said non-transitory storage medium and/or download product.

### Description of the Figures

In the following, the invention is illustrated using Figures without any intention to limit the scope of the invention. The Figures show:
Figure 1: Exemplary embodiment of the method 100 for improving the conformity of output images 3 produced by GMLM 2 with the domain and/or distribution to which a given input image 1 belongs;
Figure 2: Illustration of the optimizing of usage parameters of the GMLM;
Figure 3: Exemplary generation of a spatially resolved similarity map between a simulated input image and a generated output image;
Figure 4: Exemplary use of the similarity map generated as illustrated in Figure 3;
Figure 5: Example of locally modifying a generated output image with content from an alternate image source.

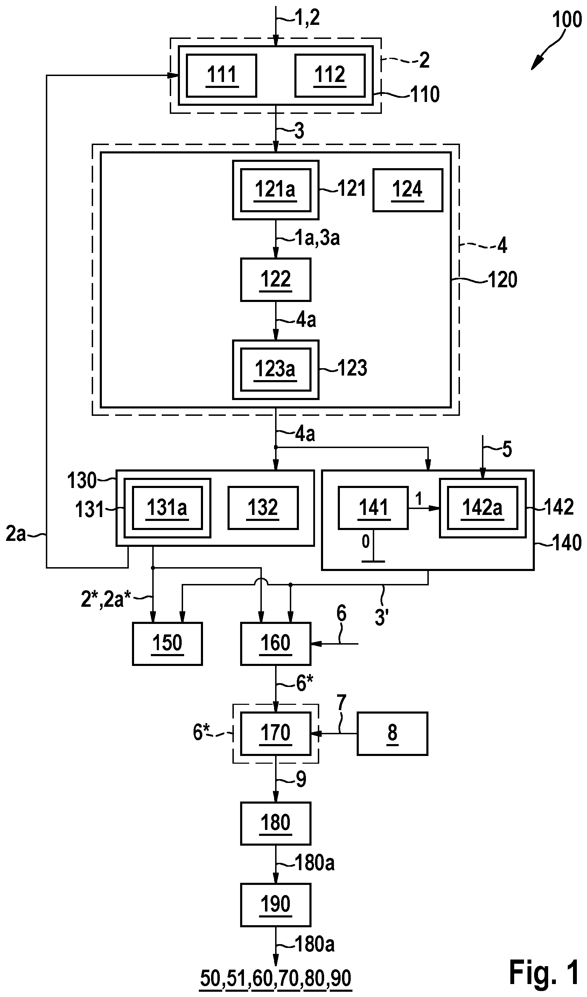

Figure 1 is a schematic flow chart of an exemplary embodiment of the method 100 for improving the conformity of output images 3 produced by GMLM 2 with the domain and/or distribution to which a given input image 1 belongs.

In step 110, at least one input image 1 is processed by the GMLM 2 into one or more output images 3.

According to block 111, at least one calibration image that is known to be realistic with respect to a given use case may be chosen as an input image 1.

According to block 112, a simulated image of a given scenery may be chosen as the input image 1.

In step 120, a predetermined similarity measure 4 is used to compare the one or more output images 3 produced from the input image 1 to the input image 1. This produces one or more similarity values 4a.

According to block 121, the input image 1 may be divided into patches, object instances and/or features 1a, and the output image may be divided into corresponding patches, object instances and/or features 3a. According to block 122, the similarity measure may then be computed with respect to individual patches, object instances and/or features 1a, 3a. Herein, for each kind of division into patches, object instances and/or features, a different similarity metric may be used. For example, the DreamSim metric may be used to rate the similarity between patches, whereas different machine learning models, or even manually configured weights, may be used for instance-size and semantic labels.

Optionally, according to block 123, multiple values 4a of the similarity measure 4 computed for individual patches, object instances and/or features 1a, 3a, and/or for the image 1, 3 as a whole, may be aggregated to form an overall rating of the similarity of patches, object instances, features, 1a, 3a, and/or the image 1, 3 as a whole.

Herein, according to block 123a, the aggregating of individual similarity values 4a may comprise one or more of:
- multiplying the individual similarity values 4a;
- forming a linear combination of the similarity values 4a;
- selecting the best of the individual similarity values 4a; and
- selecting the worst of the individual similarity values 4a.

Based on the similarity values 4a, in step 130, one or more parameters 2a that influence the behavior of the GMLM 2 may be optimized towards the goal of making subsequent output images 3 produced from the input image 1 more similar to the input image 1. The optimized state of these parameters 2a is labelled with the reference sign 2a* and denotes an optimized (but not further trained) state 2* of the GMLM 2.

According to block 131, where the GMLM 2 comprises a neural network with a plurality of neurons or other processing units, and the inputs to each neuron are weighted with weights and thereby summed in a weighted sum to form an activation of the respective neuron or other processing unit, at least a portion of these weights may remain frozen when optimizing the one or more parameters that influence the behavior of the GMLM 2.

In particular, according to block 131a, at least 80 % of the weights, preferably 99 % of the weights, and most preferably all of the weights, may remain frozen when optimizing the one or more parameters that influence the behavior of the GMLM 2.

According to block 132, the parameters 2a that influence the behavior of the GMLM 2 and that are optimized may comprise one or more of:
- a desired degree of adherence of the output image 3 to an input image 1, and/or to a text prompt, from which it is generated;
- a number of iterations, such as de-noising steps of a diffusion model, to be performed by the GMLM 2;
- an algorithm that rates the outcome of each iteration of the GMLM 2 and adapts the next iteration accordingly;
- a desired style of the output image 3; and
- a text prompt that supplements the input image 1.

Based on the similarity values 4a, in step 140, at least a portion of at least one output image 3 may be modified towards the goal of making this output image 3 more similar to the input image 1. The result is a modified output image 3'.

According to block 141, it may be checked, for a particular patch, object instance and/or feature 1a, 3a, whether the similarity 4a with respect to this patch, object instance and/or feature 1a, 3a meets a predetermined criterion. If this is the case (truth value 1), this patch, object instance and/or feature 1a, 3a may be amended with content from at least one alternate image source 5.

In particular, according to block 142a, the alternate image source may comprise one or more of:
- the output produced by a further machine learning model from the same input image 1; and
- the input image 1.

In the example shown in Figure 1, in step 150, a physical product may be manufactured, and/or a physical scenery may be set up, according to an output image 3 obtained from the GMLM 2, or a modified version 3' of such an output image 3. This output image (respectively its modified version 3') may have been produced from a different input image 1 than the one initially used to generate one or more output images 3 and rate their similarity 4a to the input image 1. The GMLM 2 may or may not be in an optimized state 2*. That is, the rating of the similarity 4a may have an impact via either of the optimization of the GMLM 2, or the creation of modified output images 3', or both.

In step 160, an image processing machine learning model 6 may be trained towards a given task using one or more output images 3 from the GMLM 2, or modified versions 3' of these output images 3, as training images. Again, the GMLM 2 may or may not be in an optimized state 2*. That is, the rating of the similarity 4a may have an impact via either of the optimization of the GMLM 2, or the creation of modified output images 3', or both.

In step 170, the trained image processing machine learning model 6* may process one or more images 7 recorded by at least one sensor 8 into an output 9 with respect to the given task. In step 180, from this output 9, an actuation signal 180a may be computed. In step 190, a vehicle 50, a driving assistance system 51, a robot 60, a quality inspection system 70, a surveillance system 80, and/or a medical imaging system 90, may be actuated with the actuation signal 180a.

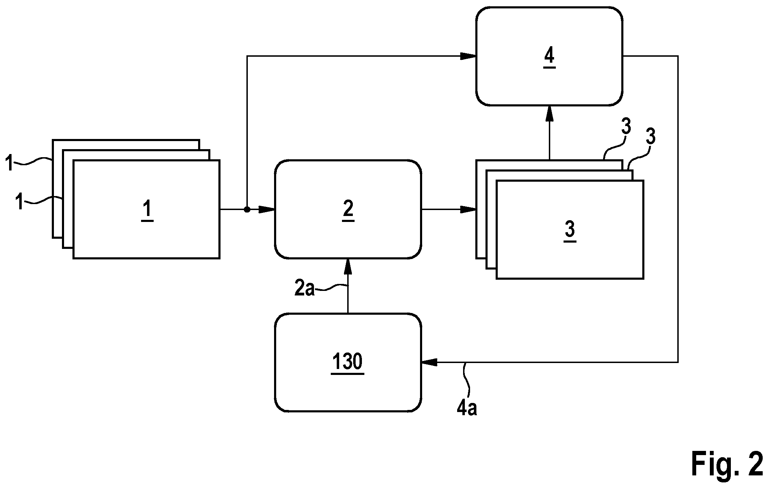

Figure 2 illustrates how usage parameters 2a of the GMLM 2 may be optimized in the course of the method 100. Input images 1 from a calibration set are processed by the GMLM into respective output images 3. The similarity measure 4 rates the similarity of each output image 3 to the respective input image 1 from which it has been produced. The resulting similarity values 4a are used in step 130 of the method 100 to determine updated values of the usage parameters 2a for the GMLM 2.

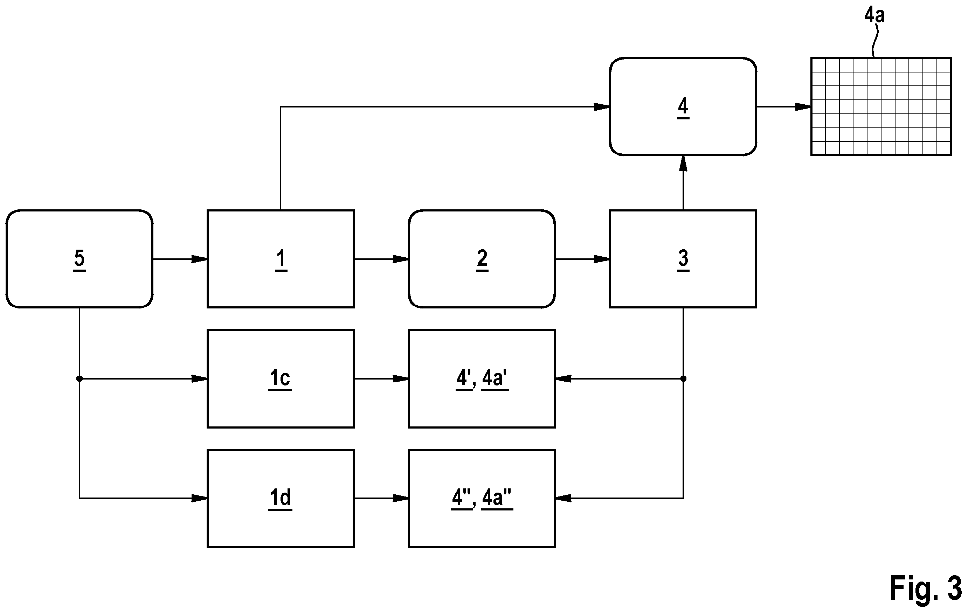

Figure 3 illustrates how the similarity between the output 3 of a GMLM 2 that is produced from a simulated image as input image 1 on the one hand, and this input image 1 on the other hand, may be rated in various ways. The first way to rate the similarity is to divide the input image 1 and the output image 3 into patches, and determine, by means of the similarity measure 4, patch-wise similarities 4a that may be stitched together in a similarity map. There is only one similarity 4a per patch, but this similarity is attributed to all pixels in this patch. In this manner, the similarity map is sort of "upscaled" to the original image size. Optionally, the similarity map may be smoothed with a low-pass filter to avoid artifacts on the cell edges.

The simulator 5 that has produced the input image 1 also knows a semantic segmentation 1c of the input image 1, as well as a segmentation 1d of the input image 1 into object instances, as ground truth. This ground truth 1c, 1d may be compared to a semantic segmentation, respectively to an object segmentation, of the output image 3. This constitutes new similarity measures 4', 4" whose values 4a', 4a" may be stitched together in spatially resolved maps as well.

The semantic segmentation 1c and the instance segmentation 1d may, for example, be put to use to calculate heuristic similarity maps. For example, regarding the size of object instances, GMLMs usually do well on large objects, but they do not so well on small objects. Therefore, the similarity between object instances is likely to increase with the size of the object instances, e.g., as a truncated and linear function. Regarding the semantic segmentation, the similarity may be evaluated per class. For example, it may turn out that the similarity is higher for vehicles and pedestrians, but lower on traffic signs and road markings.

Optionally, dithering may be applied to the final similarity map, e.g., a small noise may be added. The values may then be re-clamped to the prescribed interval, e.g., between 0 and 1.

One example of an image simulator 5 is known under the name Carla. As an alternative to simulating an image, a real-world image may be modified.

One example of a division into patches comprises a rectangular cell grid of patches, e.g., with 16x32 cells.

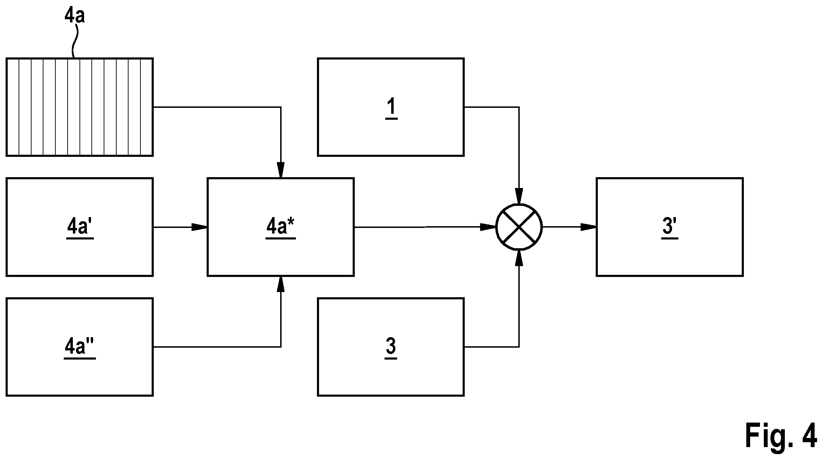

Figure 4 shows how all the similarity maps 4a, 4a' and 4a" may be put to use to enhance the output image 3 produced by the GMLM. In the example shown in Figure 4, the similarity maps 4a, 4a' and 4a" are aggregated to form a final similarity map 4a*. The original input image 1 from the simulator 5 on the one hand, and the output image 3 produced by the GMLM 2 from this input image 1 on the other hand, are blended together pixel-wise, weighted with the local similarities from the similarity map 4a* that apply to each pixel. The greater the local similarity, the more weight is given to the respective pixel of the output image 3. Where the local similarity is low, indicating that the GMLM 2 does not perform well in the respective place, pixels from the simulated input image 1 are used.

The similarity measures 4, 4' and 4" may measure the similarity, i.e., the quality of the output image 3 and its fidelity to the original input image 1, in terms of a confidence. The similarity maps 4a, 4a' and 4a" may then be regarded as confidence maps. That is, wherever the term "similarity map" appears, the term "confidence map" may be used just as well, and wherever the term "local similarity" appears, the term "local confidence" may be used just as well.

As an alternative to weighted pixel-wise blending, the input image 1 and the generated output image 3 may be decomposed and blended in a more complicated way. For example, spectral decomposition may be applied, and the low frequency component of the generated output image 3 may be preferred.

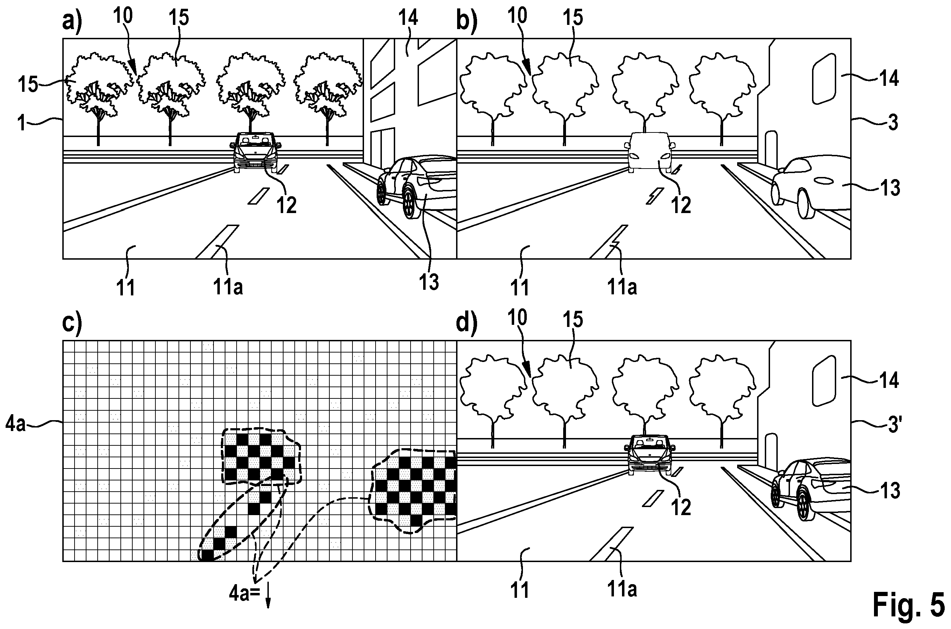

A simpler example how an input image 1 on the one hand, and an output image 3 from the GMLM 2 on the other hand, may be blended together is presented in Figure 5. The input 1 relates to a scenery 10 comprising a road 11 with road markings 11a, a first vehicle 12, a second vehicle 13, a building 14, and a forest 15. Figure 5a shows the input image 1, and Figure 5b shows the output image 3 produced by the GMLM 2 from this input image 1. The output image 3 has the same semantic content as the input image 1.

Figure 5c shows the similarity map 4a computed from the input image 1 and the output image 3. Most of the similarity map 4a is bright, indicating that the similarity is high, but there are a few darker areas where the similarity is low (↓).

Consequently, in the amended image 3' shown in Figure 5d, for each area where the similarity is low, the content from the original image 1 is used, whereas, where the similarity is high, the generated output image 3 is used. This is done by blending, with the pixels of the generated output image being given the local similarity 4a as weights.

In the example shown in Figure 5, this results in the road markings 11a, the first vehicle 12, and the second vehicle 13 being re-inserted from the original image 1, whereas the rest of the generated output image 3 is kept as it is.

## Claims

1. A method (100) for improving the conformity of output images (3) produced by a generative image-to-image machine learning model, GMLM (2), with the domain and/or distribution to which a given input image (1) belongs, comprising the steps of:
• processing (110), by the GMLM (2), at least one input image (1) into one or more output images (3);
• comparing (120), by a predetermined similarity measure (4), the one or more output images (3) produced from the input image (1) to the input image (1); and based on the result (4a) of this comparison:
• optimizing (130) one or more parameters (2a) that influence the behavior of the GMLM (2) towards the goal of making subsequent output images (3) produced from the input image (1) more similar to the input image (1); and/or
• modifying (140) at least a portion of at least one output image (3) towards the goal of making this output image (3) more similar to the input image (1).

2. The method (100) of claim 1, wherein
• the GMLM (2) comprises a neural network with a plurality of neurons or other processing units,
• the inputs to each neuron are weighted with weights and thereby summed in a weighted sum to form an activation of the respective neuron or other processing unit, and
• at least a portion of these weights remain frozen (131) when optimizing the one or more parameters that influence the behavior of the GMLM (2).

3. The method (100) of claim 2, wherein at least 80 % of the weights, preferably all of the weights, remain frozen (131a) when optimizing the one or more parameters that influence the behavior of the GMLM (2).

4. The method (100) of any one of claims 1 to 3, wherein the parameters (2a) that influence the behavior of the GMLM (2) and that are optimized comprise (132) one or more of:
• a desired degree of adherence of the output image (3) to an input image (1), and/or to a text prompt, from which it is generated;
• a number of iterations, such as de-noising steps of a diffusion model, to be performed by the GMLM (2);
• an algorithm that rates the outcome of each iteration of the GMLM (2) and adapts the next iteration accordingly;
• a desired style of the output image (3); and
• a text prompt that supplements the input image (1).

5. The method (100) of any one of claims 1 to 4, wherein at least one calibration image that is known to be realistic with respect to a given use case is chosen (111) as an input image (1).

6. The method (100) of any one of claims 1 to 5, wherein
• the input (1) and output (3) images are divided (121) into patches, object instances and/or features (1a, 3a); and
• the similarity measure (4) is computed (122) with respect to individual patches, object instances and/or features (1a, 3a).

7. The method (100) of claim 6, wherein multiple values (4a) of the similarity measure (4) computed for individual patches, object instances and/or features (1a, 3a), and/or for the image (1, 3) as a whole, are aggregated (123) to form an overall rating of the similarity of patches, object instances, features (1a, 3a), and/or the image (1, 3) as a whole.

8. The method (100) of claim 7, wherein the aggregating of individual similarity values (4a) comprises (123a) one or more of:
• multiplying the individual similarity values (4a);
• forming a linear combination of the similarity values (4a);
• selecting the best of the individual similarity values (4a); and
• selecting the worst of the individual similarity values (4a).

9. The method (100) of any one of claims 6 to 8, wherein the dividing into object instances and/or features is performed (121a) using ground truth that is available regarding the presence of object instances and/or features in the input image (1).

10. The method (100) of any one of claims 6 to 9, wherein the modifying of the output image (3) comprises: in response to determining (141) that the similarity (4a) with respect to a particular patch, object instance and/or feature (1a, 3a) meets a predetermined criterion, amending and/or replacing (142) this patch, object instance and/or feature (1a, 3a) with content from at least one alternate image source (5).

11. The method (100) of claim 10, wherein the alternate image source (5) comprises (142a) one or more of:
• the output produced by a further machine learning model from the same input image (1); and
• the input image (1).

12. The method (100) of any one of claims 1 to 11, wherein a simulated image of a given scenery is chosen (112) as the input image (1).

13. The method (100) of any one of claims 1 to 12, wherein the given similarity measure (4) is chosen (124) to combine vectorial embeddings from multiple machine learning models in one common space.

14. The method (100) of any one of claims 1 to 13, further comprising: manufacturing (150) a physical product, and/or setting up a physical scenery, according to an output image (3) obtained from the GMLM (2), or a modified version (3') of such an output image (3).

15. The method (100) of any one of claims 1 to 14, further comprising: training (160) an image processing machine learning model (6) towards a given task using one or more output images (3) from the GMLM (2), or modified versions (3') of these output images (3), as training images.

16. The method (100) of claim 15, further comprising:
• processing (170), by the trained image processing machine learning model (6*), one or more images (7) recorded by at least one sensor (8);
• computing (180), from the output (9) of the trained image processing machine learning model (6*), an actuation signal (180a); and
• actuating (190) a vehicle (50), a driving assistance system (51), a robot (60), a quality inspection system (70), a surveillance system (80), and/or a medical imaging system (90), with the actuation signal (180a).

17. A computer program, comprising machine-readable instructions that, when executed by one or more computers and/or compute instances, causes the one or more computers and/or compute instances to perform the method (100) of any one of claims 1 to 16.

18. A non-transitory computer-readable data carrier, and/or a download product, with the computer program of claim 17.

19. One or more computers and/or compute instances with the computer program of claim 17, and/or with the non-transitory computer-readable data carrier and/or with the download product of claim 18.

## Amended claims

### Amended claims in accordance with Rule 137(2) EPC.

1. A method (100) for improving the conformity of output images (3) produced by a generative image-to-image machine learning model, GMLM (2), with the domain and/or distribution to which a given input image (1) belongs, comprising the steps of:
• processing (110), by the GMLM (2), at least one input image (1) into one or more output images (3);
• comparing (120), by a predetermined similarity measure (4), the one or more output images (3) produced from the input image (1) to the input image (1); and based on the result (4a) of this comparison:
• optimizing (130) one or more parameters (2a) that influence the behavior of the GMLM (2) towards the goal of making subsequent output images (3) produced from the input image (1) more similar to the input image (1); and/or
• modifying (140) at least a portion of at least one output image (3) towards the goal of making this output image (3) more similar to the input image (1), wherein this modifying (140) comprises, where the input (1) and output (3) images are divided (121) into patches, object instances and/or features (1a, 3a). and the similarity measure (4) is computed (122) with respect to individual patches, object instances and/or features (1a, 3a): in response to determining (141) that the similarity (4a) with respect to a particular patch, object instance and/or feature (1a, 3a) meets a predetermined criterion, amending and/or replacing (142) this patch, object instance and/or feature (1a, 3a) with content from at least one alternate image source (5).

2. The method (100) of claim 1, wherein
• the GMLM (2) comprises a neural network with a plurality of neurons or other processing units,
• the inputs to each neuron are weighted with weights and thereby summed in a weighted sum to form an activation of the respective neuron or other processing unit, and
• at least a portion of these weights remain frozen (131) when optimizing the one or more parameters that influence the behavior of the GMLM (2).

3. The method (100) of claim 2, wherein at least 80 % of the weights, preferably all of the weights, remain frozen (131a) when optimizing the one or more parameters that influence the behavior of the GMLM (2).

4. The method (100) of any one of claims 1 to 3, wherein the parameters (2a) that influence the behavior of the GMLM (2) and that are optimized comprise (132) one or more of:
• a desired degree of adherence of the output image (3) to an input image (1), and/or to a text prompt, from which it is generated;
• a number of iterations, such as de-noising steps of a diffusion model, to be performed by the GMLM (2);
• an algorithm that rates the outcome of each iteration of the GMLM (2) and adapts the next iteration accordingly;
• a desired style of the output image (3); and
• a text prompt that supplements the input image (1).

5. The method (100) of any one of claims 1 to 4, wherein at least one calibration image that is known to be realistic with respect to a given use case is chosen (111) as an input image (1).

6. The method (100) of any one of claims 1 to 5, wherein
• the input (1) and output (3) images are divided (121) into patches, object instances and/or features (1a, 3a); and
• the similarity measure (4) is computed (122) with respect to individual patches, object instances and/or features (1a, 3a).

7. The method (100) of claim 6, wherein multiple values (4a) of the similarity measure (4) computed for individual patches, object instances and/or features (1a, 3a), and/or for the image (1, 3) as a whole, are aggregated (123) to form an overall rating of the similarity of patches, object instances, features (1a, 3a), and/or the image (1, 3) as a whole.

8. The method (100) of claim 7, wherein the aggregating of individual similarity values (4a) comprises (123a) one or more of:
• multiplying the individual similarity values (4a);
• forming a linear combination of the similarity values (4a);
• selecting the best of the individual similarity values (4a); and
• selecting the worst of the individual similarity values (4a).

9. The method (100) of any one of claims 6 to 8, wherein the dividing into object instances and/or features is performed (121a) using ground truth that is available regarding the presence of object instances and/or features in the input image (1).

10. The method (100) of any one of claims 1 to 9, wherein the alternate image source (5) comprises (142a) one or more of:
• the output produced by a further machine learning model from the same input image (1); and
• the input image (1).

11. The method (100) of any one of claims 1 to 10, wherein a simulated image of a given scenery is chosen (112) as the input image (1).

12. The method (100) of any one of claims 1 to 11, wherein the given similarity measure (4) is chosen (124) to combine vectorial embeddings from multiple machine learning models in one common space.

13. The method (100) of any one of claims 1 to 12, further comprising:
manufacturing (150) a physical product, and/or setting up a physical scenery,
according to an output image (3) obtained from the GMLM (2), or a modified version (3') of such an output image (3).

14. The method (100) of any one of claims 1 to 13, further comprising: training (160) an image processing machine learning model (6) towards a given task using one or more output images (3) from the GMLM (2), or modified versions (3') of these output images (3), as training images.

15. The method (100) of claim 14, further comprising:
• processing (170), by the trained image processing machine learning model (6*), one or more images (7) recorded by at least one sensor (8);
• computing (180), from the output (9) of the trained image processing machine learning model (6*), an actuation signal (180a); and
• actuating (190) a vehicle (50), a driving assistance system (51), a robot (60), a quality inspection system (70), a surveillance system (80), and/or a medical imaging system (90), with the actuation signal (180a).

16. A computer program, comprising machine-readable instructions that, when executed by one or more computers and/or compute instances, causes the one or more computers and/or compute instances to perform the method (100) of any one of claims 1 to 15.

17. A non-transitory computer-readable data carrier, and/or a download product, with the computer program of claim 16.

18. One or more computers and/or compute instances with the computer program of claim 16, and/or with the non-transitory computer-readable data carrier and/or with the download product of claim 17.
